# EUROPEAN PATENT SPECIFICATION

(11) **EP 2 026 449 B1**
(45) Date of publication and mention of the grant of the patent: **11.01.2012**
(21) Application number: 07114432.3
(22) Date of filing: 16.08.2007
(51) Int. Cl.: H02K 1/27

(54) **Rotor of brushless direct-current motor**
Rotor für einen bürstenlosen Gleichstrommotor
Rotor de moteur à courant continu sans balai

(43) Date of publication of application: 18.02.2009
(73) Proprietor: Jeung, Young-Chun, Cypress, CA 90630 (US)
(72) Inventor: Jeung, Young-Chun, Cypress, CA 90630 (US)
(74) Representative: Rupp, Christian

(56) References cited:
- EP-A- 0 106 383
- EP-A- 0 660 490
- EP-A- 1 648 073
- GB-A- 2 151 084
- JP-A- 2001 112 203
- US-A- 5 306 123
- US-A- 5 704 111
- US-A1- 2002 047 431

## Description

### BACKGROUND OF THE INVENTION

### Field of the Invention

The present invention relates to a rotor of a brushless direct-current (hereinafter, referred to as "BLDC") motor, and more particularly, to a rotor of an BLDC motor, which can prevent electromagnetic vibration and noise generated between a rotor and an armature from being transferred to a rotary shaft of the rotor during the motor driving to thereby minimize motor noise and can reduce the weight of the rotor to thereby maximize a motor's power-to-weight ratio.

### Background of the Related Art

Generally, a conventional rotor of a brushless direct-current (BLDC) motor uses a permanent magnet and a rotor core is necessarily combined with a rotor shaft using a ferromagnetic body or an electric steel sheet in order to form a magnetic circuit of the permanent magnet.

However, when the permanent-magnet rotor generates a rotation torque due to its interaction with a rotating magnetic field of an armature, electromagnetic cogging generated in an air gap between the rotor and the armature, torque ripple, or vibration caused by the interaction of electromagnetism is directly transferred to the rotor shaft and may be then transferred to another load side or may be amplified, thereby causing severe mechanical noise such as resonance noise.

An explanation on the rotor structured as described above will be in detail given.

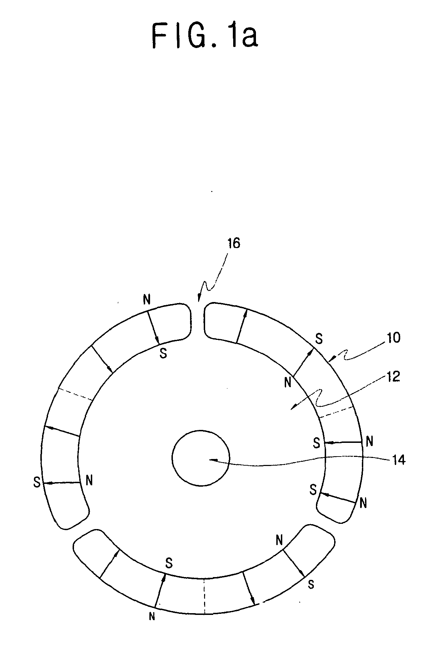

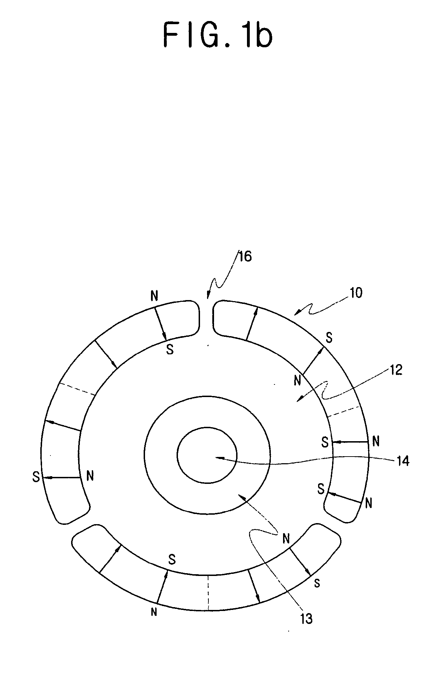

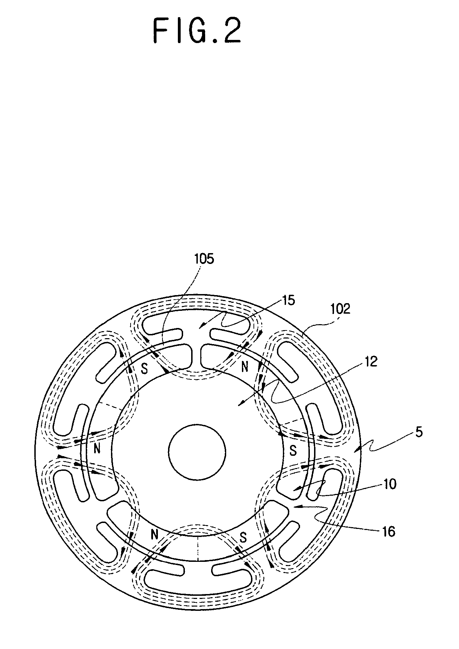

FIGS. 1A and 1B illustrate the structure of a rotor of a conventional BLDC motor, and FIG. 2 illustrates a magnetic circuit of a rotor and an armature 5 of a conventional BLDC motor.

As illustrated in FIGS. 1A and 1B, the rotor of the conventional BLDC motor has a structure in which a radially magnetized C-type permanent magnet 10 is attached to the outer circumferential face of an electric steel sheet ferromagnetic core portion 12 made of a ferromagnetic iron core or armature and a rotor shaft is inserted into a central portion of the ferromagnetic core portion 12.

The C-type permanent magnet 10 is an anisotropic magnet that is magnetized radially around the center of the rotor shaft 14. In order to form a magnetic circuit 102 with a different pole of the rotor, the C-type permanent magnet 10 has to have a ferromagnetic material such as pure iron or an electric steel sheet core provided on its inner circumferential face.

When the rotor in which the ferromagnetic core portion 12 and the C-type permanent magnet 10 are combined with each other is assembled to the center of the armature 5, the magnetic circuit 102 through which flux flows is formed as illustrated in FIG. 2. When the pole shift of the armature 5 occurs in magnetic coupling of the formed magnetic circuit 102, the rotor rotates due to interaction torque of a rotating magnetic field.

At this time, vibration caused by unbalance among magnetic flux densities of an air gap 105, a slot portion 15 of the armature 5, and a gap portion 16 of the permanent magnetic 10 of the rotor and magnetizing vibration caused by pole shift of the armature 5 are transferred to the ferromagnetic core portion 12 and a rotor shaft 14 through the permanent magnetic 10. Such vibration is directly transferred up to a load side through the rotor shaft 14, thereby amplifying mechanical vibration noise or causing resonance noise during the motor driving and increasing stress in a bearing while aggravating bearing noise, thus reducing the expected life span of a motor.

In order to reduce vibration noise of the rotor of the conventional BLDC motor, a sound-absorbing resin portion 13 such as rubber or silicon resin is inserted between the ferromagnetic core portion 12 and the rotor shaft 14, thereby blocking noise and vibration transferred through the permanent magnetic 10 and the ferromagnetic core portion 12, as illustrated in FIG. 1B.

In this case, however, the use of the ferromagnetic core portion 12 having a specific area is inevitable in order to minimize resistance between the armature 5 and the magnetic circuit 102 of the C-type permanent magnet 10, as illustrated in FIG. 2.

Moreover, the use of the magnetic core portion 12 cannot greatly reduce the weight of the rotor and the magnetic core portion 12 still acts as a medium through which cogging torque ripple, noise, or vibration generated in the rotor is transferred. As a result, the use of the sound-absorbing resin portion 13 around the rotor shaft 14 for blocking vibration has a limitation in blocking noise and vibration.

Furthermore, for the conventional permanent magnet rotor, in order to combine the permanent magnet 10 with the ferromagnetic core portion 12, a high-strength adhesive has to be used and the weight balance of the rotor may be broken during adhesion between at least two pieces divided from the permanence magnet 10.

The conventional BLDC motor has to use an electric steel sheet core so as to maintain the maximum magnetic flux density of the permanent magnet rotor and to minimize a loss of a rotating electric field. As a result, cogging torque vibration due to interaction with an armature core and electromagnetic vibration noise of the rotating magnetic field are unavoidably transferred to a load side through the motor rotary shaft.

Document JP 2001 112 203 shows a rotor of a brushless direct current motor, comprising:
a cylindrical polar anisotropic permanent magnet for allowing a magnetized magnetic path to run therethrough;
a plastic core portion mounted on the inner side of said polar anisotropic permanent magnet; and
a sound-absorbing resin portion mounted on the inner side of the high-strength core portion.

### SUMMARY OF THE INVENTION

Accordingly, the present invention has been made in view of the above-mentioned problems occurring in the prior art, and it is an object of the present invention to provide a rotor of a BLDC motor, in which a permanent magnet of the rotor is formed integrally in a ring shape as one piece and has a magnetic circuit therein, thereby removing a need for a ferromagnetic for a separate magnetic circuit through which the magnetic flux of the permanent magnet can pass.

It is another object of the present invention to provide a rotor of a BLDC motor, which can be made of a non-magnetic material or a plastic material, thereby blocking motor noise and vibration transferred through the rotor, reducing unnecessary weight and improving motor's power-to-weight ratio and operating efficiency.

It is yet another object of the present invention to provide a rotor of a BLDC motor, which can prevent a permanent magnet of the rotor from being damaged by the thermal expansion of a sound-absorbing material that is formed inside the cylindrical permanent magnet in order to block noise.

To accomplish the above objects, according to the present invention, there is provided a rotor of a brushless direct current (BLDC) motor according to claim 1.

### BRIEF DESCRIPTION OF THE DRAWINGS

The above and other objects, features and advantages of the present invention will be apparent from the following detailed description of the preferred embodiment of the invention in conjunction with the accompanying drawings, in which:

FIGS. 1A and 1B illustrate the structure of a rotor of a conventional BLDC motor;

FIG. 2 illustrates a magnetic circuit of the rotor and an armature of the conventional BLCD motor;

FIG. 3 illustrates the structure of a rotor of a BLDC motor according to the present invention;

FIG. 4 illustrates a magnetic circuit of the rotor and an armature of the BLCD motor according to the present invention;

FIG. 5 is a cross-sectional view showing the rotor of the BLDC motor according to the present invention;

FIG. 6 is a perspective view showing the rotor of the BLDC motor according to the present invention; and

FIGS. 7A through 7C are views showing comparison between a conventional technique and the present invention in order to explain the effects of the present invention.

### DETAILED DESCRIPTION OF THE PREFERRED EMBODIMENT

Hereinafter, an explanation of the preferred embodiment of the present invention will be given with reference to the attached drawings.

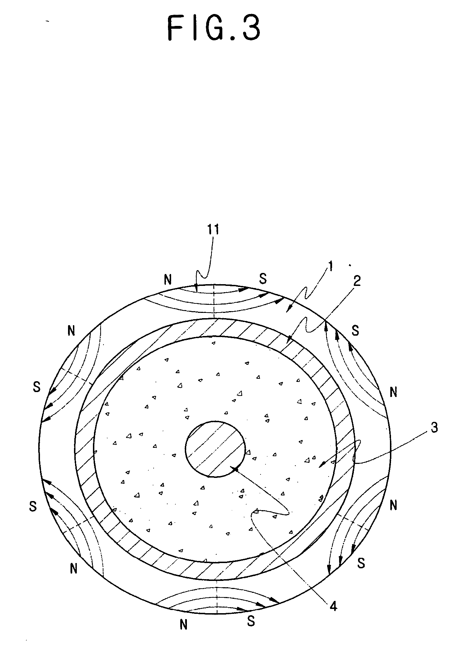

FIG. 3 illustrates the structure of a rotor of a BLDC motor according to the present invention. As illustrated in FIG. 3, the rotor includes a cylindrical permanent magnet 1 and a cylindrical high-strength core portion 2 made of aluminum having a very low thermal expansion coefficient, alloy, or high-strength engineering plastic, which is adhered to the inner circumferential portion of the permanent magnet 1.

It is preferable that the thickness of the high-strength core portion 2 is 40 - 100% of that of the permanent magnet 1.

In the rotor according to the present invention, the cylindrical high-strength core portion 2 is inserted and adhered to the inner circumferential portion of the polar anisotropic permanent magnet 1, a sound-absorbing resin portion 3 made of rubber or sound-absorbing resin such as silicon resin is inserted and adhered to the inner circumferential portion of the high-strength core portion 2 to a thickness of two times that of the high-strength core portion 2, and a rotor shaft 4 is inserted into the center of the sound-absorbing resin portion 3.

For the high-strength core portion 2, a high-strength material having superior heat-resisting property and a low thermal expansion coefficient is used, so as to prevent the cylindrical permanent magnet 1 from being damaged by the thermal expansion of the high-strength core portion 2 or the thermal expansion of the sound-absorbing resin portion 3.

The permanent magnet 1 used for the rotor according to the present invention is a cylindrical polar permanent magnet formed as one piece. The effects of the present invention cannot be achieved by undirectedly magnetized isotropic cylindrical permanent magnets or radially magnetized anisotropic permanent magnets such as C-type permanent magnets, which have been used in common. In other words, the permanent magnet 1 used in the present invention has to be a polar anisotropic permanent magnet, through which a magnetized magnetic path runs, in order to complete the present invention.

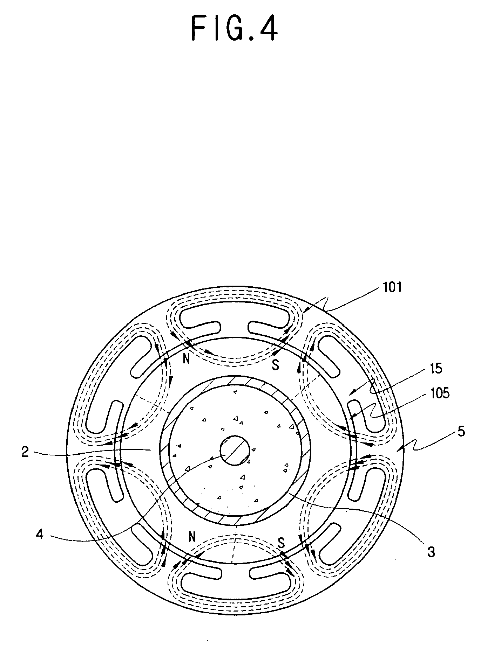

FIG. 4 illustrates a magnetic circuit 101 of the rotor and an armature of the BLCD motor according to the present invention. The rotor according to the present invention includes the magnetic circuit 101 in which a flux flow 11 is formed within the cylindrical permanent magnet 1 as illustrated in FIG. 4.

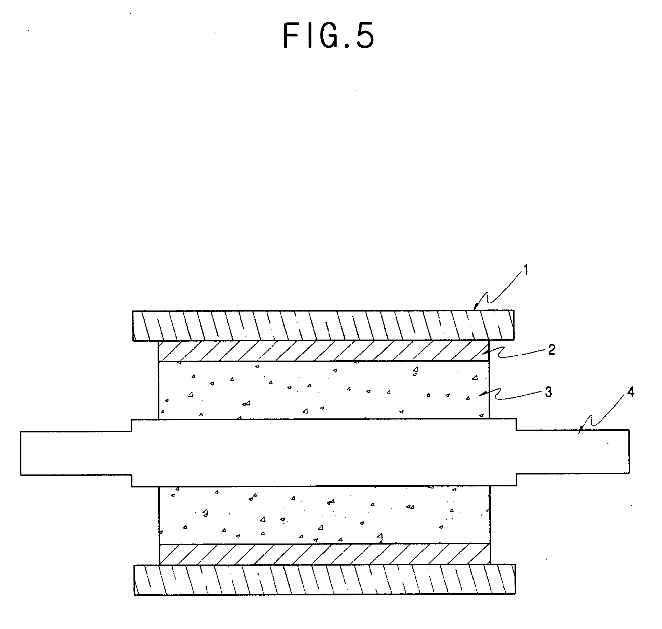

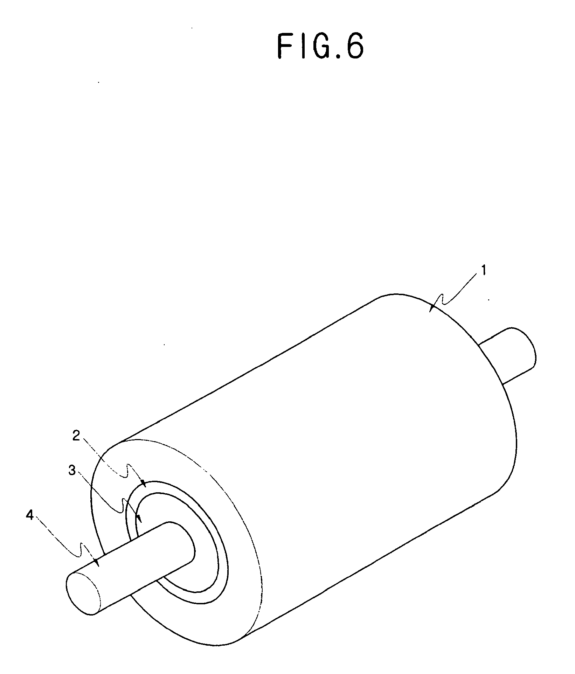

FIG. 5 is a cross-sectional view showing the rotor of the BLDC motor according to the present invention, and FIG. 6 is a perspective view showing the rotor of the BLDC motor according to the present invention.

As illustrated in FIGS. 5 and 6, the rotor according to the present invention is completed by assembling the cylindrical polar anisotropic permanent magnet 1, the cylindrical high-strength core portion 2 in the inner circumferential portion of the permanent magnet 1, the sound-absorbing resin portion 3 in the inner circumferential portion of the high-strength core portion 2, and the rotor shaft 4 in the center of the sound-absorbing resin portion 3.

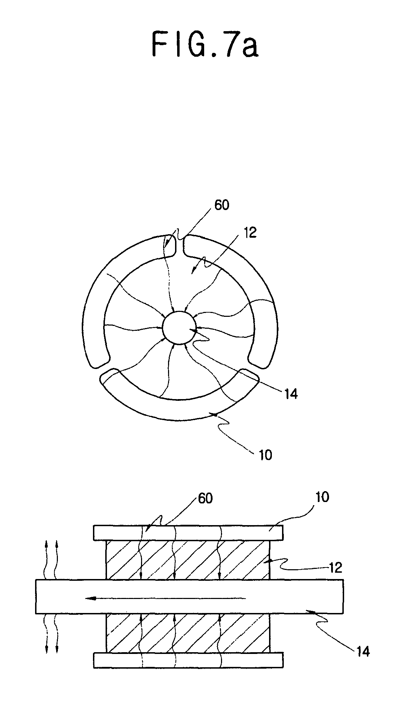

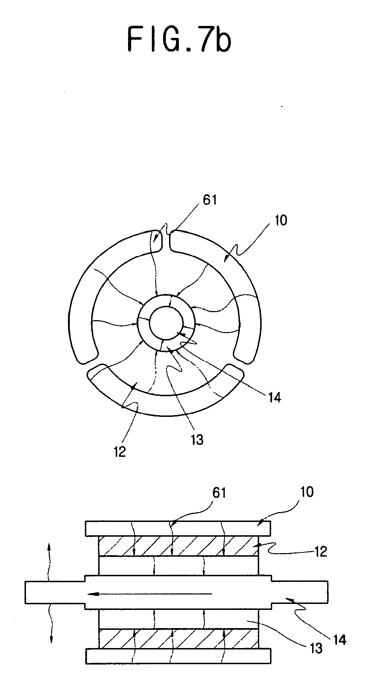

FIGS. 7A through 7C are views showing comparison between a conventional technique and the present invention in order to explain the effects of the present invention. The amount of vibration transferred to the rotor shaft 14 through a conventional permanent magnet rotor as indicated by 60 of FIG. 7A or 61 of FIG. 7B is very large.

On the other hand, the rotor according to the present invention uses the cylindrical polar anisotropic permanent magnet 1 formed as one piece, and a non-magnetic metal or high-strength plastic layer is primarily formed and a sound-absorbing resin or sound-absorbing material layer is secondarily formed in the inner circumferential portion of the rotor, thereby greatly reducing the weight of the BLDC motor.

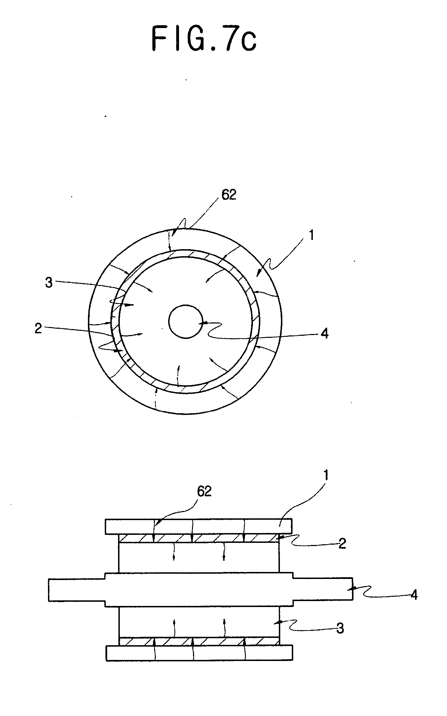

In other words, by reducing vibration and noise of a rotating magnetic field, which are transferred to the rotor shaft 4 through the rotor as indicated by 62 of FIG. 7C, by a large amount, mechanical noise and vibration in the motor and the load side can be reduced, contributing to the extension of the life span of a bearing, the motor, and the load side.

The rotor according to the present invention has the magnetic field 101 in which the flux flow 11 is formed inside the cylindrical permanent magnet 1, without a need to form the path of the magnetic circuit 101 in the permanent magnet 1 using a separate ferromagnetic.

Consequently, the high-strength core portion 2 made of a non-magnetic material or plastic that is light and has superior vibration/noise blocking property and the sound-absorbing resin portion 3 made of sound-absorbing plastic resin or other sound-absorbing materials can be used sufficiently in an inner circumferential space of the polar anisotropic permanent magnet 1, and noise and vibration generated in the air gap 105 between the armature 5 and the permanent magnet 1 can be prevented from being transferred to the rotor shaft 14.

As set forth in the foregoing, the rotor according to the present invention uses the cylindrical polar anisotropic permanent magnet, and a non-magnetic metal or high-strength plastic layer is primarily formed and a sound-absorbing resin or sound-absorbing material layer is secondarily formed in the inner circumferential portion of the rotor, thereby greatly reducing the weight of the BLDC motor.

Moreover, by reducing vibration and noise of the rotating magnetic field transferred to the rotary shaft through the rotor by a large amount, mechanical noise and vibration in the motor and the load side can be greatly reduced and the expected life span of the bearing, the motor, and other load sides can be extended.

While the present invention has been described with reference to the particular illustrative embodiment, it is not to be restricted by the embodiment but only by the appended claims.

## Claims

1. A rotor of a brushless direct current (BLDC) motor, comprising:
a cylindrical polar anisotropic permanent magnet (1) for allowing a magnetized magnetic path to run therethrough;
a high strength core portion (2) mounted on the inner side of said polar anisotropic permanent magnet (1); and
a sound-absorbing resin portion (3) mounted directly on a shaft (4) on the inner side of the high-strength core portion (2), wherein
the sound-absorbing resin portion (3) has a thickness of two times that of the high-strength core portion (2),
the thickness of the high-strength core portion (2) is 40 - 100% of that of the polar anisotropic permanent magnet (1), and
the high strength core portion (2) is formed of any one of non-magnetic metal,
aluminium having a low thermal expansion coefficient, alloy or high-strength engineering plastic.

## Patentansprüche

1. Rotor eines bürstenlosen Gleichstrom-(BLDC)-Motors, umfassend:
einen zylindrischen polar anisotropen Permanentmagneten (1) zum Erlauben, dass ein magnetischer Pfad dadurch hindurch läuft;
einen hochfesten Kernabschnitt (2), welcher auf der inneren Seite des polar anisotropen Permanentmagneten (1) montiert ist; und
einen schallabsorbierenden Harzabschnitt (3), welcher direkt auf einer Welle (4) auf der inneren Seite des hochfesten Kernabschnitts (2) montiert ist, wobei
der schallabsorbierende Harzabschnitt (3) eine Dicke eines Zweifachen von derjenigen des hochfesten Kernabschnitts (2) aufweist,
wobei die Dicke des hochfesten Kernabschnitts (2) 40 - 100 % von derjenigen des polar anisotropen Permanentmagneten (1) ist, und
wobei der hochfeste Kernabschnitt (2) gebildet ist aus irgendeinem von einem nicht-magnetischem Metall, Aluminium, welches einen niedrigen thermischen Ausdehnungskoeffizienten aufweist, einer Legierung oder einem hochfesten Maschinenbaukunststoff.

## Revendications

1. Rotor d'un moteur sans balais à courant continu (BLDC), comprenant :
un aimant permanent anisotrope polaire (1) cylindrique pour permettre qu'un trajet magnétique magnétisé s'étende à travers celui-ci ;
une partie de noyau à haute résistance (2) montée du côté interne dudit aimant permanent anisotrope polaire (1) ; et
une partie de résine insonorisante (3) montée directement sur l'arbre (4) du côté interne de la partie de noyau à haute résistance (2), dans lequel
la partie de résine insonorisante (3) a une épaisseur égale à deux fois celle de la partie de noyau à haute résistance (2),
l'épaisseur de la partie de noyau à haute résistance (2) est égale à 40 à 100 % de celle de l'aimant permanent anisotrope polaire (1), et
la partie de noyau à haute résistance (2) est constituée de l'un quelconque d'un métal non magnétique, d'un aluminium ayant un faible coefficient de dilatation thermique, d'un alliage ou d'une matière plastique d'ingénierie à haute résistance.
